# EUROPEAN PATENT APPLICATION

(11) **EP 1 369 810 A2**
(43) Date of publication of application: **10.12.2003**
(21) Application number: 03253555.1
(22) Date of filing: 05.06.2003
(51) Int. Cl.: G06F 19/00, A63F 13/12

(54) **System for providing a war game**

(30) Priority: 06.06.2002 JP 2002165585
(71) Applicant: Shizuoka University, Shizuoka City, Shizuoka Pref. (JP)
(72) Inventor: Iida, Hiroyuki, Hamamatsu City, Shizuoka Pref. (JP); Kajihara, Yoichiro, Hamamatsu City, Shizuoka Pref. (JP)
(74) Representative: Paget, Hugh Charles Edward

(57) **Abstract**

A system (100) is provided for providing a war game which is configured to dynamically change a range of location information of pieces which is to be transmitted to enemy players, depending on game situation to increase uncertainty of the game about win-or-lose. The system comprises transmitting part (160) for transmitting location information of the opponent player's group of pieces to each of players, wherein said transmitting part (160) comprises changing part for changing dynamically, on receiving move information, to be transmitted to each of players, a range of the location information of the opponent player's group based on the move of said move information and/or said location information of the two or more groups which are updated based upon move information.

## Description

### BACKGROUND OF THE INVENTION

### Field of the Invention

The present invention relates to a system for providing an war game to players whose object is to take/checkmate opponent's king, and more particularly to a system for providing an war game such as a range of location information, which is to be provided to respective players, of enemy's pieces is dynamically changed in every turn depending on the game situation thereby increasing entertaining factors of the game.

### Related Art Statements

There have been gone into actual use various systems for providing an war game, such as Japanese chess (shogi) or Western chess, to players. In the conventional systems mentioned above, war game just same as real game (e.g., Japanese chess or Western chess) is provided online to players via network.
The conventional systems could provide an online game played by two or more players or by human vs computer.

However, in the prior game systems, players can enjoy the original game such as a chess, win-or-lose is substantially dependent on a skill about that game of respective players. Thus skilled stronger players are almost to win the game, that is win-or-lose is definite and there is few chance to win by weaker players.

### SUMMARY OF THE INVENTION

The present invention has for its object to provide an war game which is configured to dynamically change a range of location information of pieces (e.g., pawns or a bishop), said location information is to be transmitted to enemy players, depending on game situation to increase uncertainty of the game about win-or-lose.
In order to attain the above mentioned object, a system is provided for providing an war game in real time played with two or more groups of pieces on a predetermined gameboard to players according to the present invention, wherein each player in turn moves any one piece of that player's group, said pieces include one or more types of pieces, movable ranges (i.e. striking ranges) of the pieces on the gameboard are defined by the types of the pieces.

Said system comprises:
storing means for storing location information of said two or more groups of pieces and rules information, wherein said rules information defines rules associated with how to determine a winner of said war game and fouls (such as invalid moves by players) about the game;
first transmitting means for transmitting location information of only his/her own group of the pieces to each of players;
receiving means for receiving move information from said each of players;
decision means for deciding whether or not said move information is a foul with reference to said rules information;
updating means for updating said location information of the group based on said received move information; and
second transmitting means for transmitting location information of the opponent player's group to said each of players,
wherein said second transmitting means comprises changing means for changing dynamically, on receiving said move information, a range of the location information of the opponent player's group, to be transmitted to said each of players, based on the move of said move information and/or said location information of the two or more groups which are updated based upon said move information.

According to the present invention, since player's view, i.e. display on a screen of opponent's pieces and its location dynamically changes upon each move by each player, on one particular occasion one player can see all or some of the opponent's pieces, but on next move he/she cannot see any pieces depending on the game situation. In this manner the player view changes rapidly on every moves. Therefore, according to the invention it is possible to introduce factors, such as prediction or recollection of location of the pieces and attacks from unheralded position, to increase entertaining factors of the game. In other words the present system can provide to users much more fun and more exciting war game than the war game supplied by the prior game system.

In a preferable embodiment of the system according to the present invention, said changing means limits said range to only location information, which is updated by said move information, of one or more pieces which can be attacked (captured) by at least one other player's piece and/or which can attack at least one other player's piece.
That is the location information of opponent's pieces to be transmitted is limited to only one or more of opponent's pieces which are attackable i.e. which are within striking distance. Thus, according to this embodiment of the present invention, since the opponent's pieces coming within the striking range can be viewed, players can easily to attack the enemy to make it possible to attack strategically. Furthermore, according to the invention, players may select tactics that the own pieces are hidden away from enemy, thus unpredictability or uncertainty of the game is increased to let the game to be more interesting or more fascinating.

In another embodiment of the system according to the present invention, said war game is provided via a network (such as LAN, WAN or the Internet) to said respective players. According to this embodiment of the present invention, it enables players widely separated by geography to play a game in real time via the network.

In still another embodiment of the system according to the present invention, said decision means comprises means for counting a number of fouls (foul count) by respective players on receiving said move information to qualify one of said players as a loser when said number of fouls is equal to or greater than a predetermined number of times.

In still another embodiment of the system according to the present invention, when said foul number of any one player of said players is equal to or greater than the predetermined number, said decision means transmits the location information, in a predetermined range, of said one player to other player. According to this embodiment of the present invention, the war game is changed from uncertainty to definite to make the game more fun.

In still another embodiment of the system according to the present invention, said war game is any one of Japanese chess, Chinese chess, or Western chess. As described above, the present invention is applicable not only to Japanese chess (i.e. shogi), but also to war games such that the object of the game is to capture the opponent's king each other by using own pieces as troops.

By way of easily explanation the aspect of the present invention has been mainly described as systems i.e. devices, however it is understood that the present invention may be realized as methods corresponding to the systems, programs embodying the methods as well as a storage media storing the programs.
For example, according to another aspect of the present invention, a method for providing an war game played with two or more groups of pieces on a predetermined gameboard to players, wherein each player in turn moves any one piece of that player's group, said pieces include one or more types of pieces, wherein movable ranges of the pieces on the gameboard are defined by the types of respective pieces,
said method comprises the steps of:
storing step for storing location information of said two or more groups of pieces and rules information, wherein said rules information defines rules associated with how to determine a winner and fouls about the game;
first transmitting step for transmitting location information of only his/her own group of the pieces to each of players;
receiving step for receiving move information including a move by said each of players from said each of players;
decision step for deciding whether or not a move of said move information is a foul on the basis of said stored rules information;
updating step for updating said location information of the groups based on said received move information; and
second transmitting step for transmitting one player's location information of said updated location information of the group to other (opponent) players,
wherein said second transmitting steps comprises changing step for changing dynamically, on receiving said move information, a range of the location information, to be transmitted to said other players, based on the move of said move information and/or said location information of the two or more groups which are updated based upon said move information.

According to still another aspect of the present invention, a computer program for performing a method for providing an war game played with two or more groups of pieces on a predetermined gameboard to players, wherein each player in turn moves any one piece of that player's group, said pieces include one or more types of pieces, wherein movable ranges of the pieces on the gameboard are defined by the types of respective pieces,
said method comprises the steps of:
storing step for storing location information of said two or more groups of pieces and rules information, wherein said rules information defines rules associated with how to determine a winner and fouls about the game;
first transmitting step for transmitting location information of only his/her own group of the pieces to each of players;
receiving step for receiving move information (including a move by said each of players) from said each of players;
decision step for deciding whether or not a move of said move information is a foul on the basis of said stored rules information;
updating step for updating said location information of the groups based on said received move information; and
second transmitting step for transmitting one player's location information of said updated location information of the group to other (opponent) players,
wherein said second transmitting steps comprises changing step for changing dynamically, on receiving said move information, a range of the location information, to be transmitted to said other players, based on the move of said move information and/or said location information of the two or more groups which are updated based upon said move information.

### BRIEF DESCRIPTION OF THE DRAWINGS

Further objects, features and advantages of the invention will become apparent from the following detailed description taken in conjunction with the accompanying figures showing a preferred embodiment of the invention, on which:
Fig. 1 is a block diagram illustrating basic arrangements of the system for providing war game according to the invention;
Fig. 2 is an exemplary diagram showing positions of the pieces on a gameboard (layout of the pieces);
Fig. 3 is exemplary diagram depicting positions of the pieces on a gameboard which is provided by the system according to the present invention;
Fig. 4 is another exemplary diagram illustrating positions of pieces on a gameboard which is provided by the system according to the present invention; and
Fig. 5 is still another exemplary diagram illustrating positions of the pieces on a gameboard which is provided by the system according to the present invention.

### DETAILED DESCRIPTION OF THE PREFERRED EMBODIMENTS

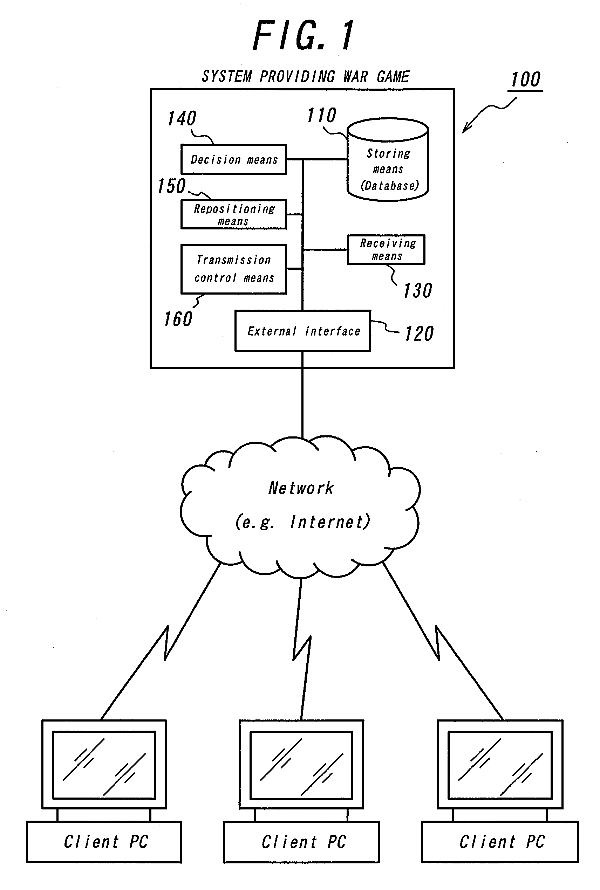

Fig. 1 is a block diagram illustrating basic arrangements of the system for providing war game according to the invention. As shown in Fig. 1, the system 100 comprises a storing means 110, an external interface 120, an external interface 120, a receiving means 130, a decision means 140, a repositioning means 150 and a transmission control means 160. The system 100 is connected to the client PCs at remote locations via a network such as the Internet. Users i.e. players can access to the system 100 via the network using the client PC to play this war game.

The storing means 110 stores location information of the groups of pieces on the board, rules information defining rules associated with how to determine a winner and fouls about the game, pieces in hand of each of players and numbers of fouls of respective players therein. The external interface 120 connects to the client terminals (e.g. PCs, PDAs or mobile phones) via the network to communicate the location information of the pieces and the move by each of players. The receiving means 130 receives data including move information from the client PCs. The decision means 140 decides whether or not a move of said move information is a foul on the basis of said stored rules information. The repositioning means 150 repositions the groups of the pieces based on the move received to update location information of the groups of the pieces stored in the database 110. The transmission control means 160 transmits location information belonging to each player's group of the pieces to the each player. Additionally, the control means 160 transmits location information of one or more pieces of one player's group which are movable to any one of piece locations of the other player's groups. In other words, although under normal conditions or early stage of the fight the control means 160 does not send any information about enemy's group of pieces, each player can see the opponent's pieces when only they come within the striking range of own peaces by each player's move.

In a practical sense, the system 100 can be a web-server comprising a CPU, a ROM, a RAM, a system bus, a communication interface and a storage. In such arrangement, it is preferable that the respective means of the system 100 are implemented as software program modules serving as the respective means. It is preferable that the client PCs have a web browser which can access the Internet and browse web pages which are provided by the present system.
Each player then inputs a move using a pointing device equipped the client PC, such as a mouse or a keyboard, and transmits the move to the system via the network.

In this embodiment, the basic rules, such that how to move pieces or a game ends in checkmate, of the war game provided by the system (hereinafter called as "present game") is almost identical to that of shogi. However there are differences between preset game and the shogi. The most significant features of present game are as follows:
(i) In general, player cannot get any information about the opponent such as opponent's pieces on the board or pieces in hand of the enemy.
(ii) Player can see opponent's pieces on the board, which opponent's pieces have positions which can be attacked (captured) by any one of that player's own pieces.
   Optionally, player can pay a predetermined fee for location information of opponent's pieces or pay a penalty such as incrementing the foul count for that information. In this embodiment, there are three agents involved in the present system: two players i.e. human users (two client PCs) and one referee program (server).

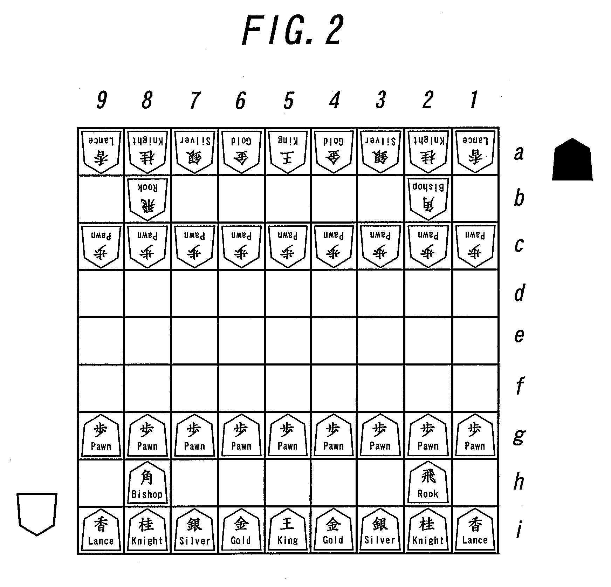

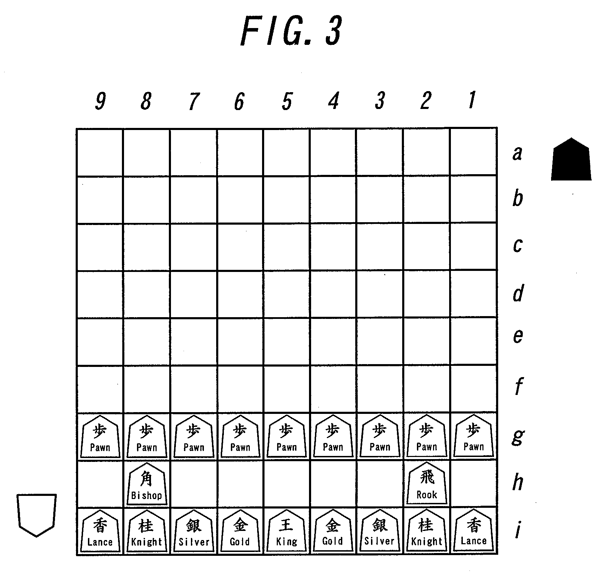

In the beginning of the present game with no handicap, players start the game with the position on the gameboard as shown in Fig. 2. Players can see only his/her own pieces. As mentioned above, due to that player generally cannot see any opponent's pieces on the board or pieces in hand (i.e. captured) of the enemy, as a matter of fact player plays with a field of view as shown in Fig. 3.

The rule of present game according to the invention will be described in detail. The rule for how the pieces move is compliant with that of original shogi. However, there are two important distinctions between present game and shogi.
First distinction is that moves, such as moving a piece beyond any opponent's pieces, and drop an own piece to the position i.e. square occupied by an opponent's piece, are "valid". In addition, one of players makes invalid move, a piece by the invalid move is brought back to the former position and the player must play another move.
Second distinction is that each player can see opponent's pieces on the board which have positions which can be attacked (captured) by any one of own pieces. For instance, when initiative player (white) moves a pawn at 7g (7th file, g rank) to 7f, a screen of the initiative player's client PC displays positions of the pieces on the board as shown in Fig. 3. That is due to that a white player's bishop at 8h becomes possible can attack (take) "a pawn at 3c", the location information of the opponent's pawn at 3c is sent to the white player. Additionally, even once the pieces can be seen, if the revealed pieces are moved to new positions which cannot be attacked by opponent's pieces, then the pieces is hidden again that is player cannot see the pieces. In this way, location information i.e. player's view is dynamically changed by each move of respective players.

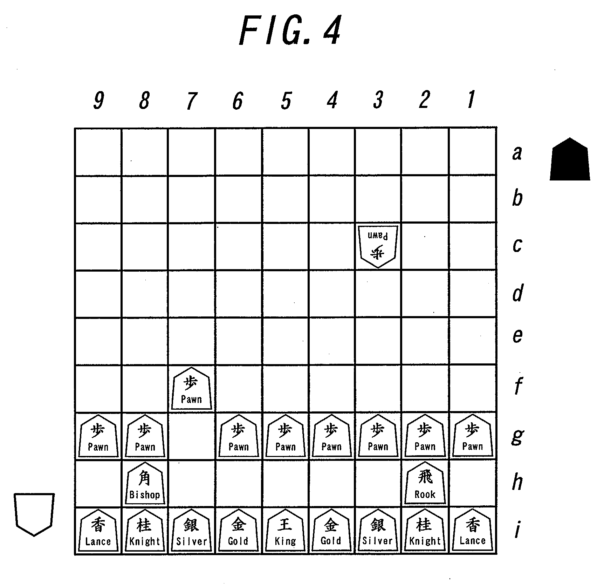

The location information at the position shown in Fig. 4 is stored in tabular form in the database by respective players as follows:

**Table 1:**

| location information table of initiative player (White) | | | | | | |
|---|---|---|---|---|---|---|
| Piece type/Piece number | Pawn-1 | Pawn-2 | .. | Pawn-7 | Bishop-1 | .. |
| Piece position | 1g | 2g | .. | 7f | 8h | .. |
| Striking range (Movable range) | | | .. | 7e | 7g,6f,5e, 4e,3c | .. |
| Opponent's Piece can be attacked | - | - | .. | Pawn-12 at 3c | | .. |

**Table 2:**

| location information table of non-initiative player (Black) | | | | | | |
|---|---|---|---|---|---|---|
| Piece type/ Piece number | Pawn-10 | Pawn-11 | Pawn-12 | .. | Bishop-2 | .. |
| Piece position | 1c | 2c | 3c | .. | 2b | .. |
| Striking range (Movable range) | 1d | 2d | 3d | .. | No | .. |
| Opponent's Piece can be attacked | - | - | .. | .. | - | .. |

As illustrated in above tables, when one piece has come within the striking range, the present system stores information that which piece can be captured into the table. The present system transmits the location information (in this case "Pawn-12 at 3c") to the initiative player (White) having the piece that can attack the opponent's piece. In this connection, movable ranges of respective pieces are defined by type of pieces in the rules information which is stored in the database. Promotion rule is also defined by type of pieces in the rules information. If one piece is promoted to a stronger piece, movable range of the promoted piece is changed to update the location information tables by the present system.

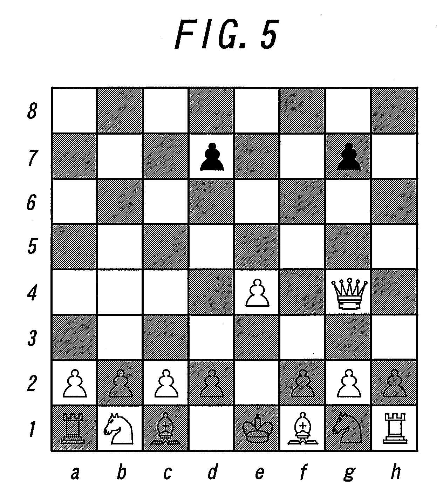

Fig.5 depicts exemplary positions of pieces on the gameboard (chess board) which is provided by the system according to the present invention. As depicted in Fig. 5, the White player moved a queen from d1 to g4, due to that the queen can move the full length on the board diagonally, horizontally, and vertically i.e. in all directions, thus the White player receives information of opponent's pieces, "pawn at d7" and "pawn at g7". In this way present system according to the present invention may be applicable to Western chess or various war games using pieces.
However Western chess has special moves such as castling and em passant. The rules information for Western chess must include such anomalistic move and its movable range. A pawn cannot usually move diagonally, but if an opposing piece is placed in the adjacent file of the own pawn, the pawn can move two spaces diagonally in a single move. Thus, if this situation arises, location information of any pieces to be captured by above mentioned special moves is stored in the storage and is transmitted to the player who can play with the special move.

Prior to start of a game, each player can select some options as follows:
1. Setting a number of fouls which can be allowed (default is 8 times).
2. Setting to allow to display enemy's location information by paying some extra charge (e.g. money or points etc.). Setting the extra charge for the information (e.g. 5 cents for each rank or 10 points for each file)

In the present game provided by the system according to the present system, situation information is incomplete and is dynamically changed with every move by respective players. In this context, the present game is referred as 'Dynamic Information (DI) Japanese chess" or "DI Western chess". Thus, due to that the situation, which is dynamically changed with each of moves, could not be represented on the prior original gameboard (such as an actual chessboard or a shougi-board), the situation must be demonstrated on a screen of any device such as a PC or a PDA. Consequently, it is preferable that the present invention is embodied as client(player)/server(referee) system as will be described in the following paragraphs.

The referee server according to the present invention mainly comprises following functions.
1. Storing complete game situation (i.e. all of the position of the pieces on the board) at any time in the storage.
2. Monitoring and evaluating the situation of the game and transmitting message(s) to player(s) if necessary.
3. Receiving a move from each player and checking whether the move is legal.

The operation of the referee server according to the present invention will be described in detail below.
In a step S1, the referee server transmits location information about both his/her own pieces and opponent's pieces which have positions which can be attacked by one of the said his/her own pieces to each of players.
In a step S2, the referee server monitors and evaluates current situation of the game with respect to each move by player. If a move is check, the referee server sends a message including a text "Your king is in check" to the player in check. If a move is checkmate that is there is no way out of check, the referee server sends a message including a text "Your king is in checkmate, game is over" to the player in checkmate and sends a message including "Game is over, You win!" to other player who checkmates.
In a step S3, the referee server waits for move information containing a move from a player in turn to play. On receiving the move information from the player, the referee server determines whether or not the move is legal with reference to the rule. If the move is determined to be valid, the referee server updates the location information of the pieces on the board based upon the move. After updating, control will return to the step S1. If the move is determined to be invalid, the referee server sends a message including " Your move is illegal, Please make another move" to the player who made the illegal move. Control will then return to the step S3.

Additionally, the referee server performs following operation.
1. When the referee server detects an illegal move of one of the players, the referee server sends a message including a text "It is an invalid move" to respective players. The referee server then increments by 1 a number of fouls of the player who made the invalid move.
2. If the referee server detects a situation that one of the pieces is captured by a player, the captured piece is removed from the board and is placed on a stand for pieces in hand of the player who captured the piece.
3. If the referee server detects a situation that a move is check, the referee server sends a message including "The move is check" to respective players. Otherwise, the referee server sends a message including a text "Player made a move" to respective players to announce that player in turn is changed.
4. If the referee server detects that the number of fouls of one player is equal or greater than a predetermined threshold value, the referee server sends a message including "Game over, You lose!" to the said one player and sends a message including "Game over, You win!" to other player. A default of the threshold is 8, but which value may optionally be set before starting a game.
5. In the same manner as a normal Japanese chess, the referee server detects that one of the kings is checkmated, the referee server will send a message including a text "Checkmate!" to respective players, and the game is finished. The player who checkmated the enemy player's King wins the game; the player who is checkmated loses the game.

The clients (such as PCs, PDAs, etc.) have following operation.
1. The each client stores situation information of both his/her own pieces and opposing pieces on the board which opposing pieces occupy squares that can be attacked by any one of the his/her own pieces.
2. The each client sends move information of a legal move which can be generated based upon the situation information to the referee server.

The operation of the each client will be described in detail.
In a step C1, the client waits for location information (i.e. situation information) from the referee server.
In a step C2, on receiving the location information, the client displays a game situation (i.e. pieces on the board and pieces in hand) on a screen based upon the received information.
In a step C3, the client checks that the client is being prompted to make move by the server. If the client is being prompted to make a move, control will be passed to a step C4, otherwise control will be returned to the step C1.
In s step C4, the client prompts a player to input a move to get move information.
In a step C5, the client transmits the move information of himself/herself to the referee server. The referee server then will return a determination result that the move is legal or not. If the move is legal, process returns to the step C1, otherwise the client informs the player that his/her move is illegal and then process jumps to the step C4.

Prior to starting a game, a limit of the foul count (i.e. threshold) may be set by players (default is eight times). When a foul number of any one player of said players is equal to or greater than the predetermined number, accordingly winning or losing is determined. Due to the limit, the game is made to be more thrilling. If the foul count of one player is equal or greater than m times (m<8, e.g. m=3), a part of information (such as information of pieces at a predetermined files, at some files, at some rank, at right half on the board or pieces in hand, etc.) about the said one player may be unveiled as punishment to inform opponent player that information. It is preferable that a range of the unveiled information may be broadened in response to increasing the foul count. In such an arrangement, the game provided by the present invention changes from uncertain to certain, accordingly the game becomes more interesting.
Additionally, if the foul count of one player is equal or greater than n times (m<n<8, e.g. n=6), all of information at this moment (all pieces location, all pieces in hand) about the said one player may be unveiled as a punishment. In this arrangement, the game also changes from uncertain to certain.

While the present invention has been described with respect to some embodiments and drawings, it is to be understood that the present invention is not limited to the above-described embodiments, and modifications and drawings, various changes and modifications may be made therein, and it is intended to cover in the appended claims all such modifications as fall within the true spirit and scope of the invention. For example the present invention is mainly described with respect to the Japanese chess in the embodiments, those skilled in the art may easily implement the present invention as Western chess or Chinese chess.

## Claims

1. A system for providing an war game played with two or more groups of pieces on a predetermined gameboard to players, wherein each player in turn moves any one piece of that player's group, said pieces include one or more types of pieces, wherein movable ranges of the pieces on the gameboard are defined by the types of respective pieces,
said system comprising:
storing means for storing location information of said two or more groups of pieces and rules information, wherein said rules information defines rules associated with how to determine a winner and fouls about the game;
first transmitting means for transmitting location information of only his/her own group of the pieces to each of players;
receiving means for receiving move information including a move by said each of players from said each of players;
decision means for deciding whether or not a move of said move information is a foul on the basis of said stored rules information;
updating means for updating said location information of the groups based on said received move information; and
second transmitting means for transmitting location information of the opponent player's group to said each of players,
wherein said second transmitting means comprises changing means for changing dynamically, on receiving said move information, a range of the location information of the opponent player's group, to be transmitted to said each of players, based on the move of said move information and/or said location information of the two or more groups which are updated based upon said move information.

2. The system according to claim 1, wherein said changing means limits said range to only location information, which is updated by said move information, of one or more pieces which can be attacked by at least one other player's piece.

3. The system according to claim 1, wherein said war game is provided via a network to said each of players.

4. The system according to claim 1, wherein said decision means comprises means for counting a number of fouls by respective players on receiving said move information to qualify one of said players as a loser when said number of fouls is equal to or greater than a predetermined number.

5. The system according to claim 4, wherein when said foul number of any one player of said players is equal to or greater than the predetermined number, said decision means transmits the location information, in a predetermined range, of said one player to other player.

6. The system according to any one of claims 1 to 5, wherein said war game is any one of Japanese chess, Chinese chess, or Western chess.
